(19) Europäisches Patentamt
European Patent Office
Office européen des brevets

(11) **EP 4 343 893 A1**

(12) **EUROPEAN PATENT APPLICATION**
published in accordance with Art. 153(4) EPC

(43) Date of publication:
**27.03.2024 Bulletin 2024/13**

(21) Application number: **22934389.2**

(22) Date of filing: **08.04.2022**

(51) International Patent Classification (IPC):
**H01M 4/505** *(2010.01)*     **C01G 53/00** *(2006.01)*

(52) Cooperative Patent Classification (CPC):
Y02E 60/10

(86) International application number:
**PCT/CN2022/085741**

(87) International publication number:
**WO 2023/184563 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2022 CN 202210329606**

(71) Applicant: **Tianjin B&M Science And Technology Co., Ltd.**
**Tianjin 300384 (CN)**

(72) Inventors:
• **JI, Changyin**
**Tianjin 300384 (CN)**
• **CHEN, Zhiyu**
**Tianjin 300384 (CN)**
• **ZHANG, Yuwei**
**Tianjin 300384 (CN)**
• **LV, Fei**
**Tianjin 300384 (CN)**
• **XU, Ning**
**Tianjin 300384 (CN)**
• **WU, Mengtao**
**Tianjin 300384 (CN)**

(74) Representative: **Ström & Gulliksson AB**
**Box 5275**
**102 46 Stockholm (SE)**

(54) **NICKEL COBALT LITHIUM MANGANATE MATERIAL AND PREPARATION METHOD THEREFOR, POSITIVE ELECTRODE MATERIAL AND LITHIUM ION BATTERY**

(57) The present disclosure relates to the technical field of lithium batteries, and particularly relates to a nickel cobalt lithium manganate material and a preparation method therefor, a positive electrode material and a lithium ion battery. The chemical formula of the nickel cobalt lithium manganate material is $Li_aNi_xCo_yMn_zQ_uR_vT_wO_2$, wherein a, x, y, z, u, v and w represent the number of moles, and satisfy; $0.98 < a \leq 1.60$, $0.80 < x \leq 1.00$, $0.00 < y \leq 0.10$, $0.00 < z \leq 0.10$, $0.0001 < u \leq 0.007$, $0.0001 < v \leq 0.007$, $0.00 \leq w \leq 0.01$; Q is trivalent antimony; R is pentavalent antimony; and T is selected from one or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum. The lithium nickel cobalt manganate material has a stable bulk phase and surface structure, and can thoroughly inhibit a side reaction between the material and an electrolyte during a charging and discharging process, inhibit the dissolution of a transition metal, improve the diffusion coefficient of the material, and improve the safety performance and long-term cycle capacity retention of the material.

FIG. 1

## Description

This application claims priority to Chinese Patent Application CN202210329606.4, titled "NICKEL COBALT LITHIUM MANGANATE MATERIAL AND PREPARATION METHOD THEREFOR, POSITIVE ELECTRODE MATERIAL AND LITHIUM ION BATTERY", filed on March31, 2022with the China National Intellectual Property Administration, which is incorporated herein by reference in its entirety.

## FIELD

The present disclosure relates to the technical field of lithium battery and in particular to a lithium nickel cobalt manganate material and preparation method therefor, a cathode material and lithium ion battery.

## BACKGROUND

Lithium battery technology has achieved rapid development since its commercialization. Electric vehicles equipped with lithium batteries have gradually become popular, bringing new solutions to world problems such as environmental pollution and climate warming. In recent years, a market demand for electric vehicle range has increased significantly, and a high-nickel material with high energy density has gradually become a research hotspot.

In the high-nickel material, lithium nickel-cobalt-manganate is widely used. Although this material has a high energy density, it has poor stability in term of bulk phase and surface structure. During a charge and discharge process, many irreversible phase changes occur due to side reactions with the electrolyte, which will lead to deterioration of material properties, such as long-term cycle capacity retention rate and safety performance.

How to improve the stability of the bulk phase and the surface structure from the material level through the development of new processes and new formulas has become a technical problem in the field of lithium-ion battery materials.

## SUMMARY

Based on this, the present disclosure provides a lithium nickel-cobalt-manganate material and a preparation method therefor, a cathode material and a lithium-ion battery. The bulk phase and surface structure of the lithium nickel-cobalt-manganate material are stable. During the charge and discharge process, side reactions between the material and the electrolyte can be well suppressed, the dissolution of transition metals can be suppressed, the diffusion coefficient of the material can be improved, and the safety and long-term cycle capacity retention rate of the material can be improved.

The technical solutions of the present disclosure are as follows:

a lithium nickel-cobalt-manganate material with a chemical formula $Li_aNi_xCo_yMn_zQ_uR_vT_wO_2$;

wherein, a, x, y, z, u, v and w represent a number of moles and satisfy: $0.98 < a \leq 1.60$, $0.80 < x \leq 1.00$, $0.00 < y \leq 0.10$, $0.00 < z \leq 0.10$, $0.0001 < u \leq 0.007$, $0.0001 < v \leq 0.007$, $0.00 \leq w \leq 0.01$;

Q is trivalent antimony; R is pentavalent antimony; and T is selected from one or more of boron, fluorine, magnesium, aluminum, silicon, phosphorus, calcium, scandium, titanium, vanadium, chromium, iron, copper, zinc, gallium, germanium, tin, and niobium, molybdenum, strontium, yttrium, zirconium, tungsten, hafnium, indium, bismuth, lanthanum, cerium, gadolinium, barium and tantalum.

In one embodiment, the a, x, y, z, u, v, w satisfy: $0.98 < a \leq 1.05$, $0.82 < x \leq 1.00$, $0.00 < y \leq 0.08$, $0.00 < z \leq 0.05$, $0.0001 < u \leq 0.005$, $0.0001 < v \leq 0.005$, $0.00 \leq w \leq 0.008$.

A method for preparing the above-mentioned nickel-cobalt-manganate material comprises following steps: performing at least one sintering treatment by using lithium source, nickel-cobalt-manganate ternary material precursor, trivalent antimony source and pentavalent antimony source as raw materials to prepare the lithium nickel-cobalt-manganate material, wherein each sintering treatment comprises at least two sintering platforms passed through.

In one embodiment, two adjacent sintering platforms have a temperature difference greater than 200 °C, and the difference of the sintering time of the two adjacent sintering platforms is greater than one hour.

In one embodiment, the step of performing at least one sintering treatment by using lithium source, nickel-cobalt-manganate ternary material precursor, trivalent antimony source and pentavalent antimony source as raw materials wherein each sintering treatment comprises at least two sintering platforms passed through comprises:

mixing the lithium source, the nickel-cobalt-manganate ternary material precursor and the pentavalent antimony source, and performing a first sintering treatment on the obtained mixture to obtain an intermediate A; wherein a first sintering platform passed through in the first sintering treatment has a temperature of 550 °C to 750 °C and a sintering time of 3 hours to 5 hours, a second sintering platform passed through in the first sintering treatment has a temperature of 750 °C to 950 °C and a sintering time of 6 hours to 10 hours;

mixing the intermediate A and the trivalent antimony source, and performing a second sintering treatment on the obtained mixture; wherein the first sintering platform passed in the second sintering treatment has a temperature of 350 °C to 550 °C and a sintering time of 1h to 3h, the second sintering platform passed in the second sintering treatment has a temperature of 550 °C to 700 °C and a sintering time of 2h to 4h.

In one embodiment, the step of performing at least one sintering treatment by using lithium source, nickel-cobalt-manganate ternary material precursor, trivalent antimony source and pentavalent antimony source as raw materials wherein each sintering treatment comprises at least two sintering platforms passed through comprises:

mixing the lithium source, the nickel-cobalt-manganate ternary material precursor and the trivalent antimony source, and performing a first sintering treatment on the obtained mixture to obtain an intermediate B; wherein a first sintering platform passed through in the first sintering treatment has a temperature of 550 °C to 750 °C and a sintering time of 3 hours to 5 hours, a second sintering platform passed through in the first sintering treatment has a temperature of 750 °C to 950 °C and a sintering time of 6 hours to 10 hours;

mixing the intermediate B and the pentavalent antimony source, and performing a second sintering treatment on the obtained mixture; wherein the first sintering platform passed in the second sintering treatment has a temperature of 350 °C to 550 °C and a sintering time of 1h to 3h, the second sintering platform passed in the second sintering treatment has a temperature of 550 °C to 700 °C and a sintering time of 2h to 4h.

In one embodiment, the step of performing at least one sintering treatment by using lithium source, nickel-cobalt-manganate ternary material precursor, trivalent antimony source and pentavalent antimony source as raw materials wherein each sintering treatment comprises at least two sintering platforms passed through comprises:
mixing the lithium source, the nickel-cobalt-manganate ternary material precursor, the trivalent antimony source and the pentavalent antimony source, and performing a sintering treatment on the obtained mixture, wherein the first sintering platform passed in the sintering treatment has a temperature of 550 °C to 750 °C and a sintering time of 3 hours to 5 hours, the second sintering platform passed in the sintering treatment has a temperature of 750 °C to 950 °C and a sintering time of 6 hours to 10 hours.

In one embodiment, the raw materials further comprises a composite additive which comprises one or more elements among boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum, and in the step of performing at least one sintering treatment, the composite additive is not added, or a part of the composite additive is added or all of the composite additive is added.

In one embodiment, after performing at least one sintering treatment, all or a remaining part of the composite additive is added, and the sintering treatment is continued; and
the continued sintering treatment is performed at a temperature of 200 °C to 350 °C for a sintering time of 3h to 5h.

In one embodiment, the lithium source is selected from one or more of lithium hydroxide, lithium carbonate, lithium nitrate, lithium oxalate and lithium acetate.

In one embodiment, the nickel-cobalt-manganate ternary material precursor has a chemical formula of $[Ni_xCo_yMn_z](OH)_2$.

In one embodiment, the trivalent antimony source is antimony trioxide.

In one embodiment, the pentavalent antimony source is antimony pentoxide.

A cathode material comprises a first lithium nickel-cobalt-manganate material and a second lithium nickel-cobalt-manganate material;

the first lithium nickel-cobalt-manganate material and the second lithium nickel-cobalt-manganate material are both the above-mentioned lithium nickel-cobalt-manganate material;

the first lithium nickel-cobalt-manganate material has a median particle size of 9 μm to 17 μm; and

the second lithium nickel-cobalt-manganate material has a median particle size of 0.5 μm to 6 μm.

In one embodiment, the ratio between the mass mi of the first lithium nickel-cobalt-manganate material and the mass $m_2$ of the second lithium nickel-cobalt-manganate material satisfies: $1<m_1/m_2<10$.

A lithium-ion battery, comprising the above-mentioned cathode material.

Compared with traditional solutions, the present disclosure has the following beneficial effects:

The lithium nickel-cobalt-manganate material of the present disclosure can be a high-nickel material and has a high compacted density. The present disclosure is designed to incorporate trivalent antimony and pentavalent antimony into it. The radius of trivalent antimony and pentavalent antimony are different. By taking the multivalent characteristics of antimony, it can enter the lithium site and the transition metal site respectively. After being prepared into a cathode sheet, it can support a layered structure of the cathode sheet and stabilize the bulk phase and surface structure of the material. Specifically, the radius of trivalent antimony ions is 0.076 nm, which is exactly the same as the ionic radius of lithium ions. It has a low formation energy and can exist stably in the lithium layer, minimizing a distortion of the crystal lattice. Moreover, a valence electron configuration of trivalent antimony is $4d^{10}5s^2$, and an outer p orbital is empty, which can form a chemical bond with three oxygen lone pairs of electrons, stably occupy the lithium position, and avoid the resonance of divalent nickel to the lithium site during the phase change process in the charge and discharge process, inhibiting generation of new mixed arrangements. The ionic radius of pentavalent antimony is 0.062 nm, which is close to the ionic radius of divalent nickel and trivalent nickel. It can enter the transition metal position. Pentavalent antimony belongs to a stable structure of $3d^{10}$. The element itself does not undergo oxidation-reduction reactions and has a certain degree of chemical inertness, which can ensure the structural stability of the position it occupies, and their respective functions will not be affected by the synthesis reaction. Lithium nickel-cobalt-manganate materials with trivalent antimony and pentavalent antimony can sufficiently inhibit the side reactions between the material and the electrolyte, inhibit the dissolution of transition metals, increase the diffusion coefficient of the material, and improve the safety performance and long-term cycle capacity retention rate of the material.

## BRIEF DESCRIPTION OF THE DRAWINGS

Figure 1 is an SEM image of the cathode material of Example 1;

Figure 2 is an SEM image of the cathode material of Example 2;

Figure 3 is an SEM image of the cathode material of Example 3.

## DETAILED DESCRIPTION OF EMBODIMENTS

The present disclosure will be described in further detail below with reference to specific examples. The present disclosure may be implemented in many different forms and is not limited to the embodiments described herein. Rather, these embodiments are provided to make that the present disclosure will be thorough and complete.

Unless otherwise defined, all technical and scientific terms used herein have the same meaning as commonly understood by those of ordinary skill in the art. The terms used herein in the description of the invention is for the purpose of describing specific embodiments and is not intended to limit the present disclosure.

TERMS

Unless otherwise stated or contradictory, the terms or phrases used herein have following meanings:

In the present disclosure, the optional scopes of the terms "and/or", "or/and" and "as well as/or" includes any one of two or more related listed items, and also includes any and all combinations of related listed items. Any and all combinations of items include any two of the related listed items, any more of the related listed items, or a combination of all of the related listed items.

In the present disclosure, "one or several" refers to any one, any two or more than two of the listed items. Among them, "several" refers to any two or more than two.

In the present disclosure, "optionally", "optional" and "option" mean that it is optional, that is, it refers to any one selected from the two parallel solutions of "with" or "without". If there are multiple "optional" in a technical solution, each "optional" will be independent unless otherwise specified and there is no contradiction or mutual restriction.

In the present disclosure, "preferred" is only used to describe an embodiment or example with better effect. It should be understood that it does not constitute a limitation on the scope of protection of the present disclosure.

In the present disclosure, the technical features described in open terms include closed technical solutions composed of the listed features, and also include open technical solutions containing the listed features.

In the present disclosure, when referring to a numerical interval, unless otherwise specified, it includes the two endpoints of the numerical interval.

In the present disclosure, when referring to a percentage content, unless otherwise specified, solid-liquid mixing and solid-solid phase mixing refer to mass percentage, and liquid-liquid phase mixing refers to volume percentage.

In the present disclosure, when referring to a percentage concentration, unless otherwise specified, it refers to the final concentration. The final concentration refers to the proportion of the added component in the system after adding the component.

In the present disclosure, when referring to temperature parameters, unless otherwise specified, it is allowed to be treated at a constant temperature, or it is allowed to be treated within a certain temperature range. The constant treatment allows the temperature to fluctuate within the precision of the instrument control.

A lithium nickel-cobalt-manganate material is provided by the present disclosure, its chemical formula is $Li_aNi_xCo_yMn_zQ_uR_vT_wO_2$;

wherein, a, x, y, z, u, v and w represent the number of moles, and satisfy: $0.98 < a \leq 1.60$, $0.80 < x \leq 1.00$, $0.00 < y < 0.10$, $0.00 < z \leq 0.10$, $0.0001 < u \leq 0.007$, $0.0001 < v \leq 0.007$, and $0.00 \leq w \leq 0.01$;

Q is trivalent antimony; R is pentavalent antimony; and T is selected from one or more of boron, fluorine, magnesium, aluminum, silicon, phosphorus, calcium, scandium, titanium, vanadium, chromium, iron, copper, zinc, gallium, germanium, tin, and niobium, molybdenum, strontium, yttrium, zirconium, tungsten, hafnium, indium, bismuth, lanthanum, cerium, gadolinium, barium and tantalum.

Furthermore, a, x, y, z, u, v and w satisfy: $0.98 < a \leq 1.05$, $0.82 < x \leq 1.00$, $0.00 < y \leq 0.08$, $0.00 < z \leq 0.05$, $0.0001 < u \leq 0.005$, $0.0001 < v \leq 0.005$, and $0.00 \leq w \leq 0.008$. The higher the nickel content, the greater the energy density.

The above elements can be introduced into the lithium nickel-cobalt-manganate material by adding corresponding composite additives during a preparation process, and the above elements can partially cover the surface of the material.

In one embodiment, in the lithium nickel-cobalt-manganate material, the weight of a surface covering layer including antimony element (trivalent antimony and pentavalent antimony) accounts for 0.01% to 0.5% of the total weight.

It can be understood that, the valence state of Li is +1, the valence state of Ni can be +2, +3, the valence state of Co is +3, the valence state of Mn is +4, the valence state of boron is +3, the valence state of fluorine is -1, the valence state of magnesium is +2, the valence state of aluminum is +3, the valence state of silicon is +4, the valence state of phosphorus is +3, +5, the valence state of calcium is +2, scandium the valence state of scandium is +3, the valence state of titanium is +4, the valence state of vanadium is +5, the valence state of chromium is +3, the valence state of iron is +3, the valence state of copper is +2, the valence state of zinc is +2, the valence state of gallium is +3, the valence state of germanium is +4, the valence state of tin is +4, the valence state of niobium is +5, the valence state of molybdenum is +6, and the valence state of strontium is +2, the valence state of yttrium is +3, the valence state of zirconium is +6, the valence state of tungsten is +6, the valence state of hafnium is +4, the valence state of indium is +3, the valence state of bismuth is +3, the valence state of lanthanum is +3, the valence state of cerium is +3, the valence state of gadolinium is +3, the valence state of barium is +2 and the valence state of tantalum is +5.

The lithium nickel-cobalt-manganate material of the present disclosure can be a high-nickel material and has a high compacted density. The present disclosure is designed to incorporate trivalent antimony and pentavalent antimony into it. The radius of trivalent antimony and pentavalent antimony are different. By taking the multivalent characteristics of antimony, it can enter the lithium site and the transition metal site respectively. After being prepared into a cathode sheet, it can support a layered structure of the cathode sheet and stabilize the bulk phase and surface structure of the material. Specifically, the radius of trivalent antimony ions is 0.076 nm, which is exactly the same as the ionic radius of lithium ions. It has a low formation energy and can exist stably in the lithium layer, minimizing a distortion of the crystal lattice. Moreover, a valence electron configuration of trivalent antimony is $4d^{10}5s^2$, and an outer p orbital is empty, which can form a chemical bond with three oxygen lone pairs of electrons, stably occupy the lithium position, and avoid the resonance of divalent nickel to the lithium site during the phase change process in the charge and discharge process, inhibiting generation of new mixed arrangements. The ionic radius of pentavalent antimony is 0.062 nm, which is close to the ionic radius of divalent nickel and trivalent nickel. It can enter the transition metal position. Pentavalent antimony belongs to a stable structure of $3d^{10}$. The element itself does not undergo oxidation-reduction reactions and has a certain degree of chemical inertness, which can ensure the structural stability of the position it occupies, and their respective functions will not be affected by the synthesis reaction. Lithium nickel-cobalt-manganate materials with trivalent antimony and pentavalent antimony can sufficiently inhibit the side reactions between the material and the electrolyte, inhibit the dissolution of transition metals, increase the diffusion coefficient of the material, and improve the safety performance and long-term cycle capacity retention rate of the material.

A part of the lithium (Li) and nickel (Ni) sites of the lithium nickel-cobalt-manganate material of the present disclosure are replaced by trivalent antimony and pentavalent antimony, and a part of trivalent antimony and pentavalent antimony covers on the surface of the material, and the trivalent antimony and pentavalent antimony on the surface of the material both exist in the form of lithium salts. Optionally, the content of trivalent antimony lithium salt and pentavalent antimony lithium salt on the surface of the material is below 5000ppm (trace transition metals are dissolved in the electrolyte). When antimony element is on the surface of the material, it is more conducive to inhibiting the occurrence of side reactions between the material and the electrolyte, inhibiting the dissolution of transition metals, improving the diffusion coefficient of the material, improving the safety performance and the long-term cycle capacity retention rate of the material.

The present disclosure also provides a method for preparing the above lithium nickel-cobalt-manganate material, comprising following step:

performing at least one sintering treatment by using lithium source, nickel-cobalt-manganate ternary material precursor, trivalent antimony source and pentavalent antimony source as raw materials to prepare the lithium nickel-cobalt-manganate material, wherein each sintering treatment comprises at least two sintering platforms passed through..

According to properties of antimony element, in the preparation process, by designing at least two sintering platforms, it is beneficial for different radius/different valence states to enter the transition metal site and lithium site respectively, and plays a role in stabilizing the bulk phase and surface structure of the material.

Preferably, the trivalent antimony source and the pentavalent antimony source have a molar ratio of 1: (0.9-1.1).

Optionally, two adjacent sintering platforms have a temperature difference of greater than 200 °C, and have a sintering time difference of greater than one hour.

Specifically, the lithium nickel-cobalt-manganate material can be prepared by the following three methods.

The first method comprises:

mixing the lithium source, the nickel-cobalt-manganate ternary material precursor and the pentavalent antimony source, and performing a first sintering treatment on the obtained mixture to obtain an intermediate A; wherein a first sintering platform passed through in the first sintering treatment has a temperature of 550 °C to 750 °C and a sintering time of 3 hours to 5 hours, a second sintering platform passed through in the first sintering treatment has a temperature of 750 °C to 950 °C and a sintering time of 6 hours to 10 hours;

mixing the intermediate A and the trivalent antimony source, and performing a second sintering treatment on the obtained mixture; wherein a first sintering platform passed through the second sintering treatment has a temperature of 350 °C to 550 °C and a sintering time of 1h to 3h, a second sintering platform passed through in the second sintering treatment has a temperature of 550 °C to 700 °C and a sintering time of 2h to 4h.

In this method, the pentavalent antimony source and the trivalent antimony source are sintered separately, and the pentavalent antimony source is sintered first, and the pentavalent antimony is easier to sinter into the material for reaction, and doped into the transition metal site to stabilize the structure. The radius of the trivalent antimony source is larger, and after sintering, it dopes into the lithium site and plays a role in stabilizing the structure, and the prepared material has better capacity and cycle performance.

The second method comprises:

mixing the lithium source, the nickel-cobalt-manganate ternary material precursor and the trivalent antimony source, and performing a first sintering treatment on the obtained mixture to obtain an intermediate B; wherein a first sintering platform passed through in the first sintering treatment has a temperature of 550 °C to 750 °C and a sintering time of 3 hours to 5 hours, a second sintering platform passed through in the first sintering treatment has a temperature of 750 °C to 950 °C and a sintering time of 6 hours to 10 hours;

mixing the intermediate B and the pentavalent antimony source, and performing a second sintering treatment on the obtained mixture; wherein a first sintering platform passed through the second sintering treatment has a temperature of 350 °C to 550 °C and a sintering time of 1h to 3h, a second sintering platform passed through in the second sintering treatment has a temperature of 550 °C to 700 °C and a sintering time of 2h to 4h.

In the method, the pentavalent antimony source and the trivalent antimony source are sintered separately, and the trivalent antimony source is sintered first. However, trivalent antimony has a larger radius and is likely to remain on the surface of the material to hinder the pentavalent antimony doping. However, since trivalent antimony and pentavalent antimony can still play a stabilizing role on transition metal sites and lithium sites, the prepared materials can still have higher capacity and better cycle performance.

The third method comprises:
mixing the lithium source, the nickel-cobalt-manganate ternary material precursor, the trivalent antimony source and the pentavalent antimony source, and performing a sintering treatment on the obtained mixture, wherein a first sintering platform passed through inthe sintering treatment has a temperature of 550 °C to 750 °C and a sintering time of 3 hours to 5 hours, a second sintering platform passed through in the sintering treatment has a temperature of 750 °C to 950 °C and a sintering time of 6 hours to 10 hours.

In this method, the pentavalent antimony source and the trivalent antimony source are simultaneously sintered, and the reactivity of the two are different, which slightly affects the capacity and cycle performance of the material.

In the above three methods, the raw materials can also comprise a composite additive, and the composite additive comprises one element or more elements of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium, and tantalum.

It can be understood that the purpose of adding the composite additive is to incorporate the above elements into the lithium nickel-cobalt-manganate material. In addition to the above elements, the composite additive can also contain lithium, nickel, cobalt, manganese and other elements. The composite additive can also be an oxide of the above elements.

Optionally, the composite additive includes but is not limited to lithium borate, lithium tungstate, lithium niobate, aluminum hydroxide, zirconium dioxide, strontium hydroxide, lithium phosphate and the like.

Optionally, in the step of performing at least one sintering treatment, the composite additive is not added, or a part of the composite additive is added or all of the composite additive is added.

Further optionally, after performing at least one sintering treatment, all or a remaining part of the composite additive is added, and the sintering is continued.

Further optionally, the continued sintering treatment is performed at a temperature of 200 °C to 350 °C for a sintering time of 3h to 5h.

It can be understood that, during the process of sintering the pentavalent antimony source and/or the trivalent antimony source, the composite additive can be added for co-sintering. The composite additive can be added to continue sintering after sintering the pentavalent antimony source and the trivalent antimony source. A part of the composite additives can be added for co-sintering during the process of sintering the pentavalent antimony source and/or the trivalent antimony source, and after the pentavalent antimony source and the trivalent antimony source are sintered, the remaining composite additive can be added to continue sintering.

Furthermore, it can be understood that when the composite additive is co-sintered with the pentavalent antimony source and/or the trivalent antimony source, each sintering treatment passes through at least two sintering platforms. When the composite additive is used to continue sintering alone, only one sintering platform can be passed through.

Preferably, in the step of performing at least one sintering treatment, a part of the composite additive is added, after performing at least one sintering treatment, the remaining part of the composite additive is added to continue sintering.

In the above three methods, the lithium source is selected from one or more of lithium hydroxide, lithium carbonate, lithium nitrate, lithium oxalate and lithium acetate. It can be understood that the lithium hydroxide may be lithium hydroxide monohydrate.

In the above three methods, the nickel-cobalt-manganate ternary material precursor has a chemical formula of $[Ni_xCo_yMn_z](OH)_2$, wherein x, y and z are as mentioned above.

It can be understood that the purpose of adjusting a particle size of the lithium nickel-cobalt manganate material can be achieved by adjusting a particle size of the nickel-cobalt-manganate ternary material precursor.

In the above three methods, the trivalent antimony source is antimony trioxide.

In the above three methods, the pentavalent antimony source is antimony pentoxide.

In the above three methods, the sintering treatment can be performed under an oxygen atmosphere.

A cathode material comprises a first lithium nickel-cobalt-manganate material and a second lithium nickel-cobalt-manganate material;

wherein the first lithium nickel-cobalt-manganate material and the second lithium nickel-cobalt-manganate material are both the above-mentioned lithium nickel-cobalt-manganate materials;

the first lithium nickel-cobalt-manganate material has a median particle size of 9 $\mu$m to 17 $\mu$m;

the second lithium nickel-cobalt-manganate material has a median particle size of 0.5 $\mu$m to 6 $\mu$m.

The above-mentioned cathode material is obtained by mixing lithium nickel-cobalt-manganate materials with different median particle sizes D50. The lithium nickel-cobalt-manganate material with small particles can be filled between the lithium nickel-cobalt-manganate materials with large particles, allowing the cathode material to be coated with a relatively high rolling density. In this way, the rolling density is increased, and the effect of increasing energy density is achieved to a certain extent. Moreover, compared with other high-nickel materials which are obtained by mixing large and small particles, resulting in lower returns, higher risks, and greatly reduced performance of high-nickel materials, the cathode material after mixing in the present disclosure still has better performance.

It can be understood that, in addition to the difference in particle size of the first lithium nickel-cobalt-manganate material and the second lithium nickel-cobalt-manganate material, the content of each component in the chemical formula may be the same or different.

Optionally, the ratio of the mass mi of the first lithium nickel-cobalt-manganate material to the mass $m_2$ of the second lithium nickel-cobalt-manganate material satisfies:

$$1 < m_1/m_2 < 10.$$

In one embodiment, a peak broadening coefficient span of the first lithium nickel-cobalt-manganate material is in a range of $0.3 \leq span \leq 1.4$, and a peak broadening coefficient span of the second lithium nickel-cobalt-manganate material is in a range of $0.3 \leq span \leq 1.4$, [span $= (D_V90 - D_V10)/D_V50$].

In one embodiment, the first lithium nickel-cobalt-manganate material has a primary particle size of 100 nm to 2000 nm, and the second lithium nickel-cobalt-manganate material has a primary particle size of 50 nm to 3000 nm.

In one embodiment, the first lithium nickel-cobalt-manganate material has a microscopic morphology of secondary spherical, and the second lithium nickel-cobalt-manganate material has a microscopic morphology of secondary spherical or/and single crystal.

In the present disclosure, the lithium nickel-cobalt-manganate material contains a high content of nickel and can be used to prepare a cathode sheet with a compacted density > 3.65 g/cc.

A lithium-ion battery, comprising the above-mentioned cathode material.

Optionally, the lithium-ion battery comprises a cathode sheet, an anode sheet, a separator for separating the cathode sheet and the anode sheet, and an electrolyte;

the cathode sheet comprises a cathode current collector and a cathode active material distributed on the cathode current collector, and the anode sheet comprises an anode current collector and an anode active material distributed on the anode current collector;

the cathode active material comprises the above-mentioned cathode material.

Further description will be carried out below in conjunction with specific examples and comparative examples. The raw materials involved in the following specific examples all can be commercially available, unless otherwise specified. The used instruments all can be commercially available, unless otherwise specified. The processes involved are conventional choices by those skilled in the art, unless otherwise specified.

Example 1

This example provides two lithium nickel-cobalt-manganate materials and the preparation methods therefor and cathode materials, the steps were as follows.

(1) 420g of lithium hydroxide monohydrate, 921g of $[Ni_{0.9}Co_{0.06}Mn_{0.04}](OH)_2$ precursor with a particle size of 9-17$\mu$m, 4.9g of zirconia ($ZrO_2$) and 2.75g of antimony pentoxide were weighed, and stirred evenly at a high speed, and then the first sintering treatment was performed under an oxygen atmosphere. The first sintering treatment was performed as follows: the obtained mixture was passed through a first sintering platform at a temperature of 650°C for 4 h, and then heated to pass through a second sintering platform with a temperature of 800°C and a sintering time of 8 h, then the intermediate A was obtained through mechanical crushing;

(2) the intermediate A obtained in step (1) was mixed with 2.48 g of antimony trioxide at a high speed, and then a second sintering treatment was performed under an oxygen atmosphere; the second sintering treatment was performed as follows: the obtained mixture was passed through a first sintering platform at a temperature of 450 °C for 2 h, and then heated to pass through a second sintering platform with a temperature of 650°C and a sintering time of 4 h, and the intermediate A* was obtained.

(3) the intermediate A* obtained in step (2) was mixed with $H_3BO_3$ at a high speed according to a weight ratio of 1:0.001, and then sintered at 300°C for 4 hours under an oxygen atmosphere to obtain the first lithium nickel-cobalt-manganate material with a median particle size of 9-17 $\mu$m and a chemical formula of

$LiNi_{0.9}Co_{0.06}Mn_{0.04}Sb^{3+}_{0.0017}Sb^{5+}_{0.0017}Zr_{0.004}O_2$;

(4) referring to the above steps (1) to step (3), the particle size of the $[Ni_{0.9}Co_{0.06}Mn_{0.04}](OH)_2$ precursor was changed to 0.5~6μm, and the second lithium nickel-cobalt-manganate material with a median particle size of 0.5μm to 6μm and a chemical formula of $LiNi_{0.9}Co_{0.06}Mn_{0.04}Sb^{3+}_{0.0017}Sb^{5+}_{0.0017}Zr_{0.004}O_2$ was obtained;

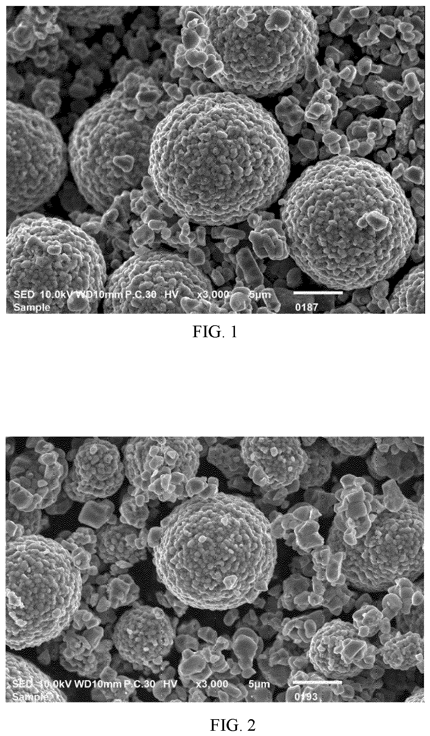

(5) the first lithium nickel-cobalt-manganate material obtained in step (3) and the second lithium nickel-cobalt-manganate material obtained in step (4) were mixed according to a mass ratio of 4:1, to obtain the cathode material, which surface scanning electron microscope image ( SEM) is as shown in Figure 1.

Example 2

This Example provides two lithium nickel-cobalt-manganate materials and the preparation method therefor and cathode materials, the steps were as follows.

(1) 420g of lithium hydroxide monohydrate, 921g of $[Ni_{0.9}Co_{0.06}Mn_{0.04}](OH)_2$ precursor with a particle size of 9-17μm, 4.96g of antimony trioxide and 4.9g of $ZrO_2$ were weighed, and stirred evenly at a high speed, and then the first sintering treatment was performed under an oxygen atmosphere. The first sintering treatment was performed as follows: the obtained mixture was passed through the first sintering platform at a temperature of 650 °C for 4 h, and then heated to pass through the second sintering platform with a temperature of 800 °C and a sintering time of 8 h, and the intermediate B was obtained through mechanical crushing;

(2) the intermediate B obtained in step (1) was mixed with 5.0 g of antimony pentoxide at high speed, and then a second sintering treatment was performed under an oxygen atmosphere; the second sintering treatment was performed as follows: the obtained mixture was passed through the first sintering platform with a temperature of 450 °C and a sintering time of 2 h, and then heated to pass through the second sintering platform with a temperature of 650 °C and a sintering time of 4 hours, and the intermediate B* was obtained;

(3) the intermediate B* obtained in step (2) was mixed with $H_3BO_3$ at a high speed according to a weight ratio of 1:0.001, and then sintered at 300 °C for 4 hours under an oxygen atmosphere to obtain the first lithium nickel-cobalt-manganate material with a median particle size of 9-17 μm and a chemical formula of $LiNi_{0.9}Co_{0.06}Mn_{0.04}Sb^{3+}_{0.0034}Sb^{5+}_{0.0031}Zr_{0.004}O_2$;

(4) referring to the above steps (1) to step (3), the particle size of the $[Ni_{0.9}Co_{0.06}Mn_{0.04}](OH)_2$ precursor was changed to 0.5~6μm, and the second lithium nickel-cobalt-manganate material with a median particle size of 0.5μm to 6μm and a chemical formula of $LiNi_{0.9}Co_{0.06}Mn_{0.04}Sb^{3+}0_{.0034}Sb^{5+}_{0.0031}Zr_{0.004}O_2$ was obtained;

(5) the first lithium nickel-cobalt-manganate material obtained in step (3) and the second lithium nickel-cobalt-manganate material obtained in step (4) were mixed according to a mass ratio of 4:1 to obtain the cathode material, which surface scanning electron microscope image ( SEM) is as shown in Figure 2.

Example 3

This Example provides two lithium nickel-cobalt-manganate materials and the preparation method therefor and cathode materials, the steps were as follows.

(1) 420g of lithium hydroxide monohydrate, 921g of $[Ni_{0.9}Co_{0.06}Mn_{0.04}](OH)_2$ precursor with a particle size of 9-17μm, 9.1 g of antimony pentoxide, 7.44 g of antimony trioxide and $ZrO_2$ 4.9 g were weighed, and stirred evenly at a high speed, and then the first sintering treatment was performed under an oxygen atmosphere. The first sintering treatment was performed as follows: the obtained mixture was passed through the first sintering platform at a temperature of 650 °C for 4 h, and then heated to pass through the second sintering platform with a temperature of 800 °C and a sintering time of 8 h, and the intermediate C was obtained through mechanical crushing;

(2) the intermediate C obtained in step (1) was mixed with $H_3BO_3$ at a high speed according to a weight ratio of 1:0.001, and then sintered at 300 °C for 4 hours under an oxygen atmosphere to obtain the first lithium nickel-cobalt-manganate material with a median particle size of 9-17 μm and a chemical formula of $LiNi_{0.9}CO_{0.06}Mn_{0.04}Sb^{3+}_{0.0051}Sb^{5+}_{0.0056}Zr_{0.004}O_2$;

(3) referring to the above steps (1) to step (2), the particle size of the $[Ni_{0.9}Co_{0.06}Mn_{0.04}](OH)_2$ precursor was changed to 0.5~6$\mu$m, and the second lithium nickel-cobalt-manganate material with a median particle size of 0.5$\mu$m to 6$\mu$mand a chemical formula of $LiNi_{0.9}Co_{0.06}Mn_{0.04}Sb^{3+}_{0.0051}Sb^{5+}_{0.0056}Zr_{0.004}O_2$was obtained;

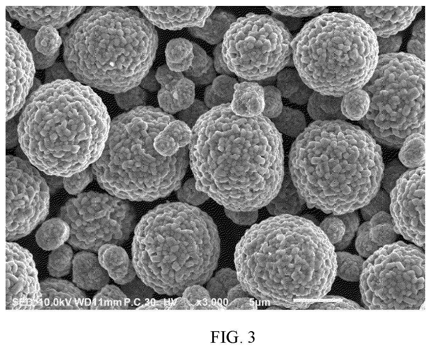

(4) the first lithium nickel-cobalt-manganate material obtained in step (2) and the second lithium nickel-cobalt-manganate material obtained in step (3) were mixed according to a mass ratio of 4:1 to obtain the cathode material, which surface scanning electron microscope image ( SEM) is as shown in Figure 3.

Comparative Example 1

This comparative Example provides two lithium nickel-cobalt-manganate materials and the preparation method therefor and cathode materials, the steps were as follows.

(1) 420g of lithium hydroxide monohydrate, 921g of $[Ni_{0.9}Co_{0.06}Mn_{0.04}](OH)_2$ precursor with a particle size of 9-17$\mu$m, 2.75g of antimony pentoxide and 4.9g of $ZrO_2$were weighed, and stirred evenly at a high speed, and then the first sintering treatment was performed under an oxygen atmosphere. The first sintering treatment was performed as follows: the obtained mixture was passed through the first sintering platform with a temperature of 650 °C and a sintering time of 4 h, and then heated to pass through the second sintering platform with a temperature of 800 °C and a sintering time of 8 h, and the intermediate D was obtained through mechanical crushing;

(2) the intermediate D obtained in step (1) was mixed with $H_3BO_3$ at a high speed according to a weight ratio of 1:0.001, and then sintered at 300 °C for 4 hours under an oxygen atmosphere to obtain the first lithium nickel-cobalt-manganate material with a median particle size of 5-18 $\mu$m and a chemical formula of $LiNi_{0.9}Co_{0.06}Mn_{0.04}Sb^{5+}_{0.0017}Zr_{0.004}O_2$;

(3) referring to the above step (1) to step (2), the particle size of the $[Ni_{0.9}Co_{0.06}Mn_{0.04}](OH)_2$ precursor was changed to 0.5~6$\mu$m, and the second lithium nickel-cobalt-manganate material with a median particle size of 0.5$\mu$m to 6$\mu$mand a chemical formula of $LiNi_{0.9}Co_{0.06}Sb^{5+}_{0.0017}Mn_{0.04}Zr_{0.004}O_2$was obtained;

(4) the first lithium nickel-cobalt-manganate material obtained in step (2) and the second lithium nickel-cobalt-manganate material obtained in step (3) were mixed according to a mass ratio of 4:1 to obtain the cathode material.

Comparative Example 2

This comparative Example provides two lithium nickel-cobalt-manganate materials and the preparation method therefor and cathode materials, the steps were as follows.

(1) 420g of lithium hydroxide monohydrate, 921g of $[Ni_{0.9}Co_{0.06}Mn_{0.04}](OH)_2$ precursor with a particle size of 9-17$\mu$m, 2.48g of antimony trioxide and 4.9g of $ZrO_2$were weighed, and stirred evenly at a high speed, and then the first sintering treatment was performed under an oxygen atmosphere. The first sintering treatment was performed as follows: the obtained mixture was passed through the first sintering platform with a temperature of 650 °C and a sintering time of 4 h, and then heated to pass through the second sintering platform with a temperature of 800 °C and a sintering time of 8 h, and the intermediate E was obtained through mechanical crushing;

(2) the intermediate E obtained in step (1) was mixed with $H_3BO_3$ at a high speed according to a weight ratio of 1:0.001, and then sintered at 300 °C for 4 hours under an oxygen atmosphere to obtain the first lithium nickel-cobalt-manganate material with a median particle size of 9-17 $\mu$m and a chemical formula of $LiNi_{0.9}Co_{0.06}Mn_{0.04}Sb^{3+}_{0.0017}Zr_{0.004}O_2$;

(3) referring to the above step (1) to step (2), the particle size of the $[Ni_{0.9}Co_{0.06}Mn_{0.04}](OH)_2$ precursor was changed to 0.5~6$\mu$m, and the second lithium nickel-cobalt-manganate material with a median particle size of 0.5$\mu$m to 6$\mu$m and a chemical formula of $LiNi_{0.9}Co_{0.06}Mn_{0.04}Sb^{3+}_{0.0017}Zr_{0.004}O_2$was obtained;

(4) the first lithium nickel-cobalt-manganate material obtained in step (2) and the second lithium nickel-cobalt-manganate material obtained in step (3) were mixed according to a mass ratio of 4:1 to obtain the cathode material.

Comparative Example 3

This comparative Example provides two lithium nickel-cobalt-manganate materials and the preparation method therefor and cathode materials, the steps were as follows.

(1) 420g of lithium hydroxide monohydrate, 921g of $[Ni_{0.9}Co_{0.06}Mn_{0.04}](OH)_2$ precursor with a particle size of 9-17$\mu$m, 4.9g of zirconia ($ZrO_2$) and 0.17g of antimony pentoxide were weighed, and stirred evenly at a high speed, and then the first sintering treatment was performed under an oxygen atmosphere. The first sintering treatment was performed as follows: the obtained mixture was passed through the first sintering platform with a temperature of 650 °C and a sintering time of 4 h, and then heated to pass through the second sintering platform with a temperature of 800 °C and a sintering time of 8 h, and the intermediate F was obtained through mechanical crushing;

(2) the intermediate F obtained in step (1) was mixed with 0.15 g of antimony trioxide at a high speed, and then a second sintering treatment was performed under an oxygen atmosphere; the second sintering treatment was performed as follows: the obtained mixture was passed through a first sintering platform with a temperature of 450 °C and a sintering time of 2 h, and then heated to pass through the second sintering platform with a temperature of 650 °C and a sintering time of 4 h, and the intermediate F* was obtained;

(3) the intermediate F* obtained in step (2) was mixed with $H_3BO_3$ at a high speed according to a weight ratio of 1:0.001, and then sintered at 300 °C for 4 hours under an oxygen atmosphere to obtain the first lithium nickel-cobalt-manganate material with a median particle size of 9-17 $\mu$m and a chemical formula of $LiNi_{0.9}Co_{0.06}Mn_{0.04}Sb^{3+}_{0.0001}Sb^{5+}_{0.0001}Zr_{0.004}O_2$;

(4) referring to the above step (1) to step (3), the particle size of the $[Ni_{0.9}Co_{0.06}Mn_{0.04}](OH)_2$ precursor was changed to 0.5~6$\mu$m, and the second lithium nickel-cobalt-manganate material with a median particle size of 0.5$\mu$m to 6$\mu$m and a chemical formula of $LiNi_{0.9}Co_{0.06}Mn_{0.04}Sb^{3+}_{0.0001}Sb^{5+}_{0.0001}Zr_{0.004}O_2$ was obtained;

(5) the first lithium nickel-cobalt-manganate material obtained in step (3) and the second lithium nickel-cobalt-manganate material obtained in step (4) were mixed according to a mass ratio of 4:1 to obtain the cathode material.

Comparative Example 4

This comparative Example provides two lithium nickel-cobalt-manganate materials and the preparation method therefor and cathode materials, the steps were as follows.

(1) 420g of lithium hydroxide monohydrate, 921g of $[Ni_{0.9}Co_{0.06}Mn_{0.04}](OH)_2$ precursor with a particle size of 9-17$\mu$m, 2.75g of antimony pentoxide and 4.9g of $ZrO_2$ were weighed, and stirred evenly at a high speed, then sintered at 800°C for 8 hours under an oxygen atmosphere, and then the intermediate G was obtained through mechanical crushing;

(2) the intermediate G obtained in step (1) was mixed with 2.48 g of antimony trioxide at a high speed, and then sintered at 650 °C for 4 h under an oxygen atmosphere to obtain the intermediate G*;

(3) the intermediate G* obtained in step (2) was mixed with $H_3BO_3$ at a high speed according to a weight ratio of 1:0.001, and then sintered at 300 °C for 4 hours under an oxygen atmosphere to obtain the first lithium nickel-cobalt-manganate material with a median particle size of 9-17 $\mu$m and a chemical formula of $LiNi_{0.9}Co_{0.06}Mn_{0.04}Sb^{3+}_{0.0017}Sb^{5+}_{0.0017}Zr_{0.004}O_2$;

(4) referring to the above step (1) to step (3), the particle size of the $[Ni_{0.9}Co_{0.06}Mn_{0.04}](OH)_2$ precursor was changed to 0.5~6$\mu$m, and the second lithium nickel-cobalt-manganate material with a median particle size of 0.5$\mu$m to 6$\mu$m and a chemical formula of $LiNi_{0.9}Co_{0.06}Mn_{0.04}Sb^{3+}_{0.0017}Sb^{5+}_{0.0017}Zr_{0.004}O_2$ was obtained;

(5) the first lithium nickel-cobalt-manganate material obtained in step (3) and the second lithium nickel-cobalt-manganate material obtained in step (4) were mixed according to a mass ratio of 4:1 to obtain the cathode material.

The properties of the cathode materials of the above examples and comparative examples were tested. The method was as follows.

(1) The lithium impurity content determination in the cathode material

The acid-base titration method was adopted to determine the lithium impurity content in the cathode material. 5 g of the cathode material samples prepared in each example and comparative example were put into 95 ml of pure water, and stirred for 30 minutes and then allowed standing for 5 minutes. 10 ml of supernatant was taken after suction filtration, and the dissolved lithium impurity in the cathode material was titrated by using 0.05mol/L hydrochloric acid standard solution, an electrochemical titration method was used for measurement, and the lithium impurity content in the cathode material was calculated. The results are shown in Table 1.

(2) gram capacity test of the cathode material

The cathode material prepared by each example and comparative example, a conductive agent acetylene black, and a binder polyvinylidene fluoride (PVDF) were mixed in a mass ratio of 96.5:1.5:2, and the N-methylpyrrolidone (NMP) solvent was added. In a glove box, a high-speed mixer was used to stir until uniform, and a cathode material slurry was obtained; the cathode material slurry was evenly coated on an aluminum foil of a cathode current collector, and then the cathode sheet was obtained after drying, cold pressing and other processes.
The commercially available electrolyte was used as a battery electrolyte, a lithium sheet was used as an anode sheet. The prepared cathode sheet, the battery electrolyte and the anode sheet were assembled to form a standard button battery.
Under a voltage of 2.5V to 4.25 V, the button battery was charged to 4.25V at a constant current of 0.2C, then charged at a constant voltage of 4.25V until a current was less than or equal to 0.05mA, and then allowed standing for 2 minutes. The charging capacity at this time was recorded as $C_0$. Then the button battery was discharged to2.5V at a constant current of 0.2C, and the discharge capacity at this time was recorded as $D_0$. The ratio of the discharge capacity $D_0$ to the mass of the cathode material is the gram capacity of the cathode material. The first coulombic efficiency (%) of the cathode material=$D_0/C_0\times100\%$. The results are shown in Table 1.

(3) cycle performance test

The button battery in (2) was repeatedly charged and discharged at 45°Cand a voltage of 2.5V to 4.25V and 0.5CC/1 DC to obtain the cycle performance capacity retention rate result of the material, as shown in Table 1.

Table 1

| | capacity/mAh/g (2.5V~4.25V @ 0.2 C) | electrode density/ g/cc | long-term cycle performance retention rate (2.5V~4.25V@ 0.5CC/ 1 DC) | lithium impurity / ppm |
|---|---|---|---|---|
| Example 1 | 218.3 | 3.72 | 95.6 | 968 |
| Example2 | 217.2 | 3.70 | 95.1 | 1050 |
| Example3 | 215.8 | 3.70 | 94.3 | 1067 |
| Comparative Example 1 | 213.3 | 3.66 | 92.1 | 1103 |
| Comparative Example2 | 213.5 | 3.67 | 92.3 | 1132 |
| Comparative Example3 | 212.7 | 3.65 | 90.1 | 1130 |
| Comparative Example4 | 212.6 | 3.66 | 90.3 | 1129 |

From the data in Table 1, it can be seen that Example 1 is a better solution. Due to the difference in the reactivity and the radius between the pentavalent antimony and the trivalent antimony, antimony pentoxide is easier to sinter into the material for reaction, and dopes into the transition metal site, which plays a role in stabilizing the structure; antimony trioxide has a larger radius and enters the lithium site after sintering. Although there is a certain loss of active lithium, the overall performance is excellent. The results show that sintering antimony pentoxide first and then sintering antimony trioxide can avoid the hindering effect of the first doping elements on the later doping elements, and the capacity and long-term cycle capacity retention rate of the material are both good.

Compared with Example 1, in Example 2, antimony trioxide was sintered first. Since antimony trioxide has a larger radius, if a part remains on the surface of the material, it could hinder the subsequent doping of pentavalent antimony into the transition metal site, resulting in a high lithium impurity content on the surface and affecting the performance of the material. But in general, due to the stabilizing effect of antimony trioxide on the lithium site and the inhibition of side reactions with the electrolyte on the surface of the material, the capacity and long-term cycle capacity retention rate of the material were still good.

Compared with Example 1, in Example 3, antimony pentoxide and antimony trioxide were added together for sintering. Due to their different radius and reactivity, antimony trioxide is not easy to penetrate into the inner of the material, and it will affect the doping of antimony pentoxide, resulting in a high lithium impurity content on the surface and affecting its performance. Therefore, the capacity and long-term cycle capacity retention rate of the material had a certain decline compared with Example 1, but the overall performance was acceptable.

Compared with Example 1, in Comparative Example 1, only antimony pentoxide was added. Although the transition metal site of the material was stabilized to a certain extent, the overall capacity and long-term cycle capacity retention rate of the material was still not satisfying.

Compared with Example 1, in Comparative Example 2, only antimony trioxide was added. Although the lithium site of the material was stabilized to a certain extent, the overall capacity and long-term cycle capacity retention rate of the material was still not satisfying.

Compared with Example 1, a very small amount of antimony pentoxide and antimony trioxide were added in Comparative Example 3, which resulted in the transition metal sites and lithium sites of the material not being stabilized to a certain extent, the overall capacity and the long-term cycle capacity retention rate of the material were still not satisfying.

Compared with Example 1, Comparative Example 4 did not pass through at least two sintering platforms when sintering antimony pentoxide and antimony trioxide. The reaction degree of the materials was not as expected, resulting in insufficient performance of the cathode material, and the capacity and long-term cycle capacity retention rate were poor.

The technical features of the above-mentioned examples can be combined arbitrarily. To make the description concise, all possible combinations of the technical features in the above-mentioned examples are not described. However, as long as there is no contradiction in the combination of these technical features, all should be considered to be within the scope of the present disclosure.

The above-mentioned examples only express several implementation modes of the present disclosure, and their descriptions are relatively specific and detailed, but they should not be construed as limiting the scope of the present disclosure. It should be noted that, for those of ordinary skill in the art, several modifications and improvements can be made without departing from the concept of the present disclosure, and these all belong to the protection scope of the present disclosure. Therefore, the protection scope of the present disclosure should be based on the appended claims.

**Claims**

1. A lithium nickel-cobalt-manganate material, which has a chemical formula of $Li_aNi_xCo_yMn_zQ_uR_vT_wO_2$;

   wherein a, x, y, z, u, v and w represent numbers of moles and satisfy: $0.98 < a \leq 1.60$, $0.80 < x \leq 1.00$, $0.00 < y < 0.10$, $0.00 < z \leq 0.10$, $0.0001 < u \leq 0.007$, $0.0001 < v \leq 0.007$, $0.00 \leq w \leq 0.01$;
   Q is trivalent antimony; R is pentavalent antimony; T is selected from one or more of boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum.

2. The lithium nickel-cobalt-manganate material according to claim 1, wherein a, x, y, z, u, v and w satisfy: $0.98 < a \leq 1.05$, $0.82 < x \leq 1.00$, $0.00 < y \leq 0.08$, $0.00 < z \leq 0.05$, $0.0001 < u \leq 0.005$, $0.0001 < v < 0.005$, and $0.00 \leq w \leq 0.008$.

3. A method for preparing lithium nickel-cobalt-manganate material according to any one of claims 1 to 2, comprising:performing at least one sintering treatment by using lithium source, nickel-cobalt-manganate ternary material precursor, trivalent antimony source and pentavalent antimony source as raw materials to prepare the lithium nickel-cobalt-manganate material, wherein each sintering treatment comprises at least two sintering platforms passed through.

4. The method for preparing lithium nickel-cobalt-manganate material according to claim 3, wherein two adjacent sintering platforms have a temperature difference of greater than 200 °C, and have a sintering time difference of greater than one hour.

5. The method for preparing lithium nickel-cobalt-manganate material according to any one of claims 3 to 4, wherein the step of performing at least one sintering treatment by using lithium source, nickel-cobalt-manganate ternary material precursor, trivalent antimony source and pentavalent antimony source as raw materials wherein each sintering treatment comprises at least two sintering platforms passed through comprises:

mixing the lithium source, the nickel-cobalt-manganate ternary material precursor and the pentavalent antimony source, and performing a first sintering treatment on the obtained mixture to obtain an intermediate A; wherein a first sintering platform passed through in the first sintering treatment has a temperature of 550 °C to 750 °C and a sintering time of 3 hours to 5 hours, a second sintering platform passed through in the first sintering treatment has a temperature of 750 °C to 950 °C and a sintering time of 6 hours to 10 hours;
mixing the intermediate A and the trivalent antimony source, and performing a second sintering treatment on the obtained mixture; wherein the first sintering platform passed in the second sintering treatment has a temperature of 350 °C to 550 °C and a sintering time of 1h to 3h, the second sintering platform passed in the second sintering treatment has a temperature of 550 °C to 700 °C and a sintering time of 2h to 4h.

6. The method for preparing lithium nickel-cobalt-manganate material according to any one of claims 3 to 4, wherein the step of performing at least one sintering treatment by using lithium source, nickel-cobalt-manganate ternary material precursor, trivalent antimony source and pentavalent antimony source as raw materials wherein each sintering treatment comprises at least two sintering platforms passed through comprises:

mixing the lithium source, the nickel-cobalt-manganate ternary material precursor and the trivalent antimony source, and performing a first sintering treatment on the obtained mixture to obtain an intermediate B; wherein a first sintering platform passed through in the first sintering treatment has a temperature of 550 °C to 750 °C and a sintering time of 3 hours to 5 hours, a second sintering platform passed through in the first sintering treatment has a temperature of 750 °C to 950 °C and a sintering time of 6 hours to 10 hours;
mixing the intermediate B and the pentavalent antimony source, and performing a second sintering treatment on the obtained mixture; wherein a first sintering platform passed through the second sintering treatment has a temperature of 350 °C to 550 °C and a sintering time of 1h to 3h, a second sintering platform passed through in the second sintering treatment has a temperature of 550 °C to 700 °C and a sintering time of 2h to 4h.

7. The method for preparing lithium nickel-cobalt-manganate material according to any one of claims 3 to 4, wherein the step of performing at least one sintering treatment by using lithium source, nickel-cobalt-manganate ternary material precursor, trivalent antimony source and pentavalent antimony source as raw materials wherein each sintering treatment comprises at least two sintering platforms passed through comprises:
mixing the lithium source, the nickel-cobalt-manganate ternary material precursor, the trivalent antimony source and the pentavalent antimony source, and performing a sintering treatment on the obtained mixture, wherein a first sintering platform passed through in the sintering treatment has a temperature of 550 °C to 750 °C and a sintering time of 3 hours to 5 hours, a second sintering platform passed through in the sintering treatment has a temperature of 750 °C to 950 °C and a sintering time of 6 hours to 10 hours.

8. The method for preparing lithium nickel-cobalt-manganate material according to any one of claims 3 to 4, wherein the raw materials further comprises a composite additive which comprises one or more elements among boron, fluorine, magnesium, aluminum, silicon, phosphorus, calcium, scandium, titanium, vanadium, chromium, iron, copper, zinc, gallium, germanium, tin, niobium, molybdenum, strontium, yttrium, zirconium, tungsten, hafnium, indium, bismuth, lanthanum, cerium, gadolinium, barium and tantalum, and in the step of performing at least one sintering treatment, the composite additive is not added, or a part of the composite additive is added or all of the composite additive is added.

9. The method for preparing lithium nickel-cobalt-manganate material according to claim 8, wherein after performing at least one sintering treatment, all or a remaining part of the composite additive is added, and the sintering treatment is continued; and
the continued sintering treatment was performed at a temperature of 200 °C to 350 °C for a sintering time of 3h to 5h.

10. The method for preparing lithium nickel-cobalt-manganate material according to any one of claims 3, 4 and 9, wherein the lithium source is selected from one or more of lithium hydroxide, lithium carbonate, lithium nitrate, lithium oxalate and lithium acetate, and /or

the nickel-cobalt-manganate ternary material precursor has a chemical formula of $[Ni_xCo_yMn_z](OH)_2$; and /or

the trivalent antimony source is antimony trioxide; and /or
the pentavalent antimony source is antimony pentoxide.

**11.** A cathode material, comprising:

a first lithium nickel-cobalt-manganate material and a second lithium nickel-cobalt-manganate material;
wherein the first lithium nickel-cobalt-manganate material and the second lithium nickel-cobalt-manganate material are both the lithium nickel-cobalt-manganate material according to any one of claims 1 to 2;
the first lithium nickel-cobalt-manganate material has a median particle size of 9 $\mu$m to 17 $\mu$m; and
the second lithium nickel-cobalt-manganate material has a median particle size of 0.5 $\mu$m to 6 $\mu$m.

**12.** The cathode material according to claim 11, wherein the ratio between the mass mi of the first lithium nickel-cobalt-manganate material and the mass $m_2$ of the second lithium nickel-cobalt-manganate material satisfies: $1 < m_1/m_2 < 10$.

**13.** A lithium-ion battery, comprising the cathode material according to claim 11 or claim 12.

FIG. 1

FIG. 2

FIG. 3

## INTERNATIONAL SEARCH REPORT

| International application No. |
| --- |
| **PCT/CN2022/085741** |

**A. CLASSIFICATION OF SUBJECT MATTER**

H01M 4/505(2010.01)i; C01G 53/00(2006.01)i

According to International Patent Classification (IPC) or to both national classification and IPC

**B. FIELDS SEARCHED**

Minimum documentation searched (classification system followed by classification symbols)

H01M C01G

Documentation searched other than minimum documentation to the extent that such documents are included in the fields searched

Electronic data base consulted during the international search (name of data base and, where practicable, search terms used)

CNPAT, CNKI, WPI, EPODOC: 正极, 三元, 阴极, 镍, Ni, 钴, Co, 锰, Mn, 掺杂, 电池, 三价, 五价, 三氧化二锑, 锑, Sb, 五氧化二锑, Sb2O5, Sb2O3, 粒径, positive, electrode, ternary, cathode, nickel, cobalt, manganese, doping, battery, trivalent, pentavalent, particle, size

**C. DOCUMENTS CONSIDERED TO BE RELEVANT**

| Category* | Citation of document, with indication, where appropriate, of the relevant passages | Relevant to claim No. |
| --- | --- | --- |
| X | CN 112447965 A (NINGDE CONTEMPORARY AMPEREX TECHNOLOGY CO., LTD.) 05 March 2021 (2021-03-05) description, paragraphs 0038-0139, 0146 and 0150 | 1-7, 10 |
| X | CN 112447950 A (NINGDE CONTEMPORARY AMPEREX TECHNOLOGY CO., LTD.) 05 March 2021 (2021-03-05) description, paragraphs 0023-0144 | 1-7, 10 |
| Y | CN 112447965 A (NINGDE CONTEMPORARY AMPEREX TECHNOLOGY CO., LTD.) 05 March 2021 (2021-03-05) description, paragraphs 0038-0139, 0146 and 0150 | 8-9, 11-13 |
| Y | CN 112447950 A (NINGDE CONTEMPORARY AMPEREX TECHNOLOGY CO., LTD.) 05 March 2021 (2021-03-05) description, paragraphs 0023-0144 | 8-9, 11-13 |
| Y | CN 109768232 A (GUANGDONG BRUNP RECYCLING TECHNOLOGY CO., LTD. et al.) 17 May 2019 (2019-05-17) description, paragraphs [0008]-[0028] | 8-9 |

☑ Further documents are listed in the continuation of Box C. ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **18 November 2022** | **05 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/085741** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 107611371 A (GEM (WUXI) ENERGY MATERIAL CO., LTD. et al.) 19 January 2018 (2018-01-19)<br>description, paragraphs 0005-0040 and 0048 | 11-13 |
| A | CN 108461736 A (SUZHOU LIONANO NEW ENERGY CO., LTD. et al.) 28 August 2018 (2018-08-28)<br>entire document | 1-13 |

Form PCT/ISA/210 (second sheet) (January 2015)

**INTERNATIONAL SEARCH REPORT**
Information on patent family members

International application No.

**PCT/CN2022/085741**

| Patent document cited in search report | | | Publication date (day/month/year) | Patent family member(s) | | | Publication date (day/month/year) |
|---|---|---|---|---|---|---|---|
| CN | 112447965 | A | 05 March 2021 | WO | 2021042977 | A1 | 11 March 2021 |
| | | | | CN | 112447965 | B | 11 January 2022 |
| | | | | EP | 3944378 | A1 | 26 January 2022 |
| | | | | US | 2022177328 | A1 | 09 June 2022 |
| CN | 112447950 | A | 05 March 2021 | EP | 3933981 | A1 | 05 January 2022 |
| | | | | WO | 2021042986 | A1 | 11 March 2021 |
| CN | 109768232 | A | 17 May 2019 | None | | | |
| CN | 107611371 | A | 19 January 2018 | None | | | |
| CN | 108461736 | A | 28 August 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210329606